# EUROPÄISCHE PATENTSCHRIFT

(11) **EP 3 469 211 B1**
(45) Veröffentlichungstag und Bekanntmachung des Hinweises auf die Patenterteilung: **25.09.2024**
(21) Anmeldenummer: 17728845.3
(22) Anmeldetag: 09.06.2017
(51) Int. Cl.: F03D 1/06, F03D 13/10, B66C 1/10

(54) **ROTORBLATT, WINDENERGIEANLAGE SOWIE VERFAHREN ZUR MONTAGE UND ZUR HERSTELLUNG EINES ROTORBLATTES**
ROTOR BLADE, WIND TURBINE AND METHOD FOR INSTALLING AND PRODUCING A ROTOR BLADE
PALE DE ROTOR, ÉOLIENNE ET PROCÉDÉ DE MONTAGE ET DE FABRICATION D'UNE PALE DE ROTOR

(30) Priorität: 10.06.2016 DE 102016110747
(43) Veröffentlichungstag der Anmeldung: 17.04.2019
(73) Patentinhaber: Wobben Properties GmbH, 26607 Aurich (DE)
(72) Erfinder: RUBNER, Florian, 26607 Aurich (DE)
(74) Vertreter: Eisenführ Speiser
(86) Internationale Anmeldenummer: PCT/EP2017/064084
(87) Internationale Veröffentlichungsnummer: WO 2017/212017

(56) Entgegenhaltungen:
- WO-A1-2012/163358
- WO-A2-2004/070203
- DE-A1- 102011 051 574
- DE-B3- 102011 076 937
- US-A1- 2013 149 154
- US-A1- 2013 236 324
- US-A1- 2015 316 028

## Beschreibung

Die Erfindung betrifft ein Rotorblatt, eine Windenergieanlage sowie ein Verfahren zur Montage und zur Herstellung eines Rotorblattes.

Ein Rotorblatt einer Windenergieanlage umfasst in der Regel ein oberes und ein unteres Schalenelement. Die Schalenelemente bilden mit ihren äußeren Oberflächen im Wesentlichen die äußere Geometrie eines Rotorblattes, wobei zusätzliche Elemente wie z.B. Hinterkantensegment und/oder Blattspitze hinzukommen können. In der Regel enthält das Rotorblatt ein oberes Schalenelement mit einem Holmgurt und/oder ein unteres Schalenelement mit einem Holmgurt. Der Holmgurt ist beziehungsweise die Holmgurte sind vorzugsweise an einer Innenseite der Schalenelemente angeordnet. Der Holmgurt ist vorzugsweise auf oder an einer inneren Fläche des Schalenelements angeordnet und/oder in das Schalenelement eingebettet. Die Holmgurte dienen insbesondere zur Versteifung des Rotorblattes in einer Längsrichtung, sodass diese insbesondere zur Aufnahme von Kräften entlang einer longitudinalen Erstreckung des Rotorblattes ausgebildet sind. Holmgurte sind im Allgemeinen derart gestaltet, dass diese ein erstes und ein zweites Ende aufweisen. Der Holmgurt weist darüber hinaus in der Regel eine flächige Geometrie auf, die durch eine Längserstreckung und eine Quererstreckung gebildet wird. Orthogonal zur Quererstreckung und orthogonal zur Längserstreckung weist ein Holmgurt vorzugsweise eine Dicke auf.

### geänderte Beschreibungsseite 2

Unter anderem wegen der steigenden wirtschaftlichen Anforderungen an Windenergieanlagen ist der Trend zu erkennen, dass die Windenergieanlagen, beispielsweise hinsichtlich einer Nabenhöhe und/oder eines Rotordurchmessers, größer werden. Der Rotordurchmesser steht in der Regel in einem direkten Zusammenhang mit einer Längserstreckung der einzelnen Rotorblätter, wobei die Längserstreckung wiederum Auswirkungen auf das Gewicht eines jeden einzelnen Rotorblattes hat. Durch die zunehmenden Abmessungen und/oder das zunehmende Gewicht der Rotorblätter wird die Handhabung eines einzelnen Rotorblattes erschwert. Dies ist insbesondere bei der Montage eines Rotorblattes relevant, wobei ein Rotorblatt vorzugsweise präzise an eine Nabe und/oder einen Blattadapter einer Windenergieanlage geführt wird. Neben dieser ohnehin schwierigen Aufgabe der Positionierung eines großen und schweren Rotorblatts, kommen gegebenenfalls weitere erschwerende Randbedingungen hinzu, wie beispielsweise ungünstige Wetterbedingungen.

Durch die in der Regel schwierige Positionierung eines Rotorblattes während der Montage müssen Montagetermine nicht selten verschoben werden. Somit verzögert sich der Aufbau einer einzelnen Anlage und/oder eines gesamten Windenergieanlagenwindparks, was in der Regel auch mit höheren Kosten einher geht. Dies kann wiederum die Rentabilität und/oder Reputation des Windenergieanlagen-Herstellers reduzieren. Die existierenden Vorrichtungen und Verfahren bieten verschiedene Vorteile, jedoch sind weitere Verbesserungen wünschenswert.

Das Deutsche Patent- und Markenamt hat in der Prioritätsanmeldung zu vorliegender Anmeldung folgenden Stand der Technik recherchiert: DE 10 2011 076 937 B3. Ferner beschreibt die DE 10 2011 051 574 A1 ein Rotorblatt mit integriertem Handhabungsmechanismus-Befestigungsbohrungen. Die US 2015/316028 A1 offenbart ein Rotorblatt mit einem integralen Schersteg oder mehreren integralen Scherstegen.

Es ist daher eine Aufgabe der vorliegenden Erfindung, ein Rotorblatt, eine Windenergieanlage sowie ein Verfahren zur Montage und zur Herstellung eines Rotorblattes bereitzustellen, welche einen oder mehrere der genannten Nachteile vermindern oder beseitigen. Insbesondere ist es eine Aufgabe der Erfindung, ein Rotorblatt, eine Windenergieanlage sowie ein Verfahren zur Montage und zur Herstellung eines Rotorblattes bereitzustellen, welche eine bessere Positionierung eines Rotorblatts während der Montage ermöglichen. Darüber hinaus ist es eine Aufgabe der Erfindung, ein Rotorblatt, eine Windenergieanlage sowie ein Verfahren zur Montage und zur Herstellung eines Rotorblattes bereitzustellen, die einen Windenergieanlagenaufbau ermöglichen, der unabhängiger von Randbedingungen, wie beispielsweise den Wetterverhältnissen, erfolgen kann.

### geänderte Beschreibungsseite 3 (Reinschrift)

Die eingangs genannte Aufgabe wird gelöst, durch ein Rotorblatt für eine Windenergieanlage gemäß den Ansprüchen 1 und 2 sowie durch eine Windenergieanlage gemäß Anspruch 13, durch ein Verfahren zur Montage eines Rotorblattes gemäß Anspruch 14 sowie durch ein Verfahren zur Herstellung eines Rotorblattes gemäß Anspruch 15.

Der Wurzelbereich eines Rotorblattes ist vorzugsweise der Bereich eines Rotorblattes, der in einem Betriebszustand der Windenergieanlage der Nabe zugewandt ist. Ferner vorzugsweise weist der Wurzelbereich in der Regel einen kreisrunden Querschnitt orthogonal zur Längsachse des Rotorblattes und einen am Ende des Rotorblattes angeordneten Flansch auf, mit dem das Rotorblatt an einer Nabe und/oder einem Blattadapter befestigt wird.

Die Blattspitze ist dem Wurzelbereich gegenüberliegend angeordnet, sodass die Blattspitze an einem Ende des Rotorblattes angeordnet ist, das einer Nabe und/oder einem Blattadapter der Windenergieanlage abgewandt ist. Zwischen dem Ende des Rotorblattes am Wurzelbereich und dem Ende des Rotorblattes an der Blattspitze erstreckt sich in Längsrichtung die Längserstreckung des Rotorblattes.

Orthogonal zur Längserstreckung des Rotorblattes erstreckt sich die Quererstreckung in Querrichtung. Die Quererstreckung des Rotorblattes erstreckt sich insbesondere von einer Vorderkante zu einer Endkante. Der Bereich angrenzend an die Vorderkante des Rotorblattes wird auch als Nasenbereich bezeichnet. Vorzugsweise ist in diesem Bereich des Rotorblattes auch die sogenannte Holmstruktur angeordnet, wobei die Holmstruktur vorzugsweise einen, zwei oder mehrere Holmgurte umfasst. Vorzugsweise bilden die der bzw. die Holmgurte und ein, zwei oder mehrere Holmstege einen Holm. Dieser Holm weist orthogonal zur Längsrichtung des Rotorblatts und/oder des Holms einen Holmquerschnitt auf.

Der Erfindung liegt die Erkenntnis zugrunde, dass Holmgurte üblicherweise in einem Bereich, in Bezug auf die Querrichtung, angeordnet werden, der eine maximale Erstreckung in Dickenrichtung aufweist. Durch die erfindungsgemäße Anordnung von zwei Holmgurten auf der Druckseite und/oder der Saugseite, können diese in Richtung der Vorderkante und/oder Endkante derart angeordnet werden, dass eine Hebeöffnung im Bereich einer Schwerelinie anzuordnen ist.

Die Holmgurte können verschiedene Materialien umfassen oder aus diesen bestehen. Insbesondere ist es bevorzugt, dass die Holmgurte aus einem Faserverbundmaterial bestehen oder dieses umfassen. Als Faserverbundmaterial sind insbesondere solche Materialen bevorzugt, die Glasfasern, beispielsweise Hochmodulglasfasern oder E-Glasfasern, und/oder Kohlefasern und/oder Aramitfasern umfassen. Ferner können die Holmgurte auch aus mehr als einem Faserverbundmaterial bestehen oder diese umfassen. Als Matrix wird vorzugsweise ein Epoxidharz eingesetzt.

In einem Bereich angrenzend an die Endkante ist vorzugsweise der sogenannte Hinterkasten angeordnet. Die Vorderkante und die Endkante sind ferner die Bereiche des Rotorblatts, an denen Ober- und Unterschale aufeinander treffen und vorzugsweise miteinander verbunden sind.

Orthogonal zu der Längsrichtung und orthogonal zu der Querrichtung erstreckt sich das Rotorblatt in eine Dickenrichtung. Die Erstreckung des Rotorblatts in Dickenrichtung ist die Dicke. Durch die Erstreckung in Längsrichtung und in Querrichtung werden zwei sich gegenüberliegende Seiten des Rotorblattes gebildet. Dabei wird die eine Seite als Druckseite und die andere Seite als Saugseite bezeichnet. Die Druckseite und die Saugseite weisen jeweils vorzugsweise unterschiedlich ausgebildete Flächen auf. Das Rotorblatt wird durch das Prinzip des aerodynamischen Auftriebs bewegt. Wenn Wind auf ein Rotorblatt trifft, so wird Luft sowohl oberhalb als auch unterhalb des Blattes entlang geführt. Durch die unterschiedliche Ausbildung der Druckseite und der Saugseite wird ermöglicht, dass die Luft oberhalb des Blattes einen längeren Weg von der Vorderkante bis zur Endkante um das Profil herum zurück zu legen hat und somit schneller fließen muss als die Luft entlang der Unterseite. Dadurch entsteht oberhalb des Blattes, an der Saugseite, ein Unterdruck und unterhalb des Blattes, an der Druckseite, ein Überdruck.

Die Holmgurte, also der vordere Druckseitenholmgurt und/oder der hintere Druckseitenholmgurt und/oder der vordere Saugseitenholmgurt und/oder der hintere Saugseitenholmgurt, erstrecken sich im Wesentlichen in Längsrichtung des Rotorblattes jeweils von einem ersten Ende, welches sich vorzugsweise in einem Bereich angrenzend an oder im Wurzelbereich befindet, zu einem zweiten Ende, das vorzugsweise in einem Bereich angeordnet ist, der die Blattspitze umfasst oder an die Blattspitze angrenzt. Ein Holmgurt muss sich daher nicht zwingend von einem Wurzelbereich bis zu einer Blattspitze eines Rotorblattes erstrecken. Der vordere Druckseitenholmgurt und der vordere Saugseitenholmgurt sind vorzugsweise in einem Bereich angrenzend an die Vorderkante des Rotorblattes angeordnet. Der hintere Druckseitenholmgurt und der hintere Saugseitenholmgurt sind vorzugsweise in einem Bereich angeordnet, der der Endkante zugewandt ist. Wenn auf der Druckseite lediglich der vordere Druckseitenholmgurt oder der hintere Druckseitenholmgurt vorgesehen ist, kann sich dieser einzelne Druckseitenholmgurt vorzugsweise von einem Bereich angrenzend an die Vorderkante des Rotorblattes bis zu einem Bereich angrenzend an die Endkante des Rotorblattes erstrecken. Wenn auf der Saugseite lediglich der vordere Saugseitenholmgurt oder der hintere Saugseitenholmgurt vorgesehen ist, kann sich dieser einzelne Saugseitenholmgurt vorzugsweise von einem Bereich angrenzend an die Vorderkante des Rotorblattes bis zu einem Bereich angrenzend an die Endkante des Rotorblattes erstrecken. Insgesamt sind stets mindestens drei Holmgurte vorzusehen. In einer Ausführungsvariante mit der Mindestanzahl von drei Holmgurten ist vorgesehen, dass entweder ein vorderer und ein hinterer Druckseitenholmgurt sowie ein Saugseitenholmgurt oder ein vorderer und ein hinterer Saugseitenholmgurt sowie ein Druckseitenholmgurt vorgesehen ist. Bei einer Ausführungsvariante mit dem vorderen und dem hinteren Druckseitenholmgurt sowie dem einen Saugseitenholmgurt ist die Hebeöffnung in Querrichtung vorzugsweise zwischen dem vorderen Druckseitenholmgurt und dem hinteren Druckseitenholmgurt angeordnet. Bei einer Ausführungsvariante mit dem vorderen und dem hinteren Saugseitenholmgurt sowie dem einen Druckseitenholmgurt ist die Hebeöffnung in Querrichtung vorzugsweise zwischen dem vorderen Saugseitenholmgurt und dem hinteren Saugseitenholmgurt angeordnet.

Der vordere Druckseitenholmgurt und/oder der hintere Druckseitenholmgurt sind in einem Bereich des Rotorblatts angeordnet, der der Druckseite des Rotorblattes zugewandt ist. Der vordere Saugseitenholmgurt und der hintere Saugseitenholmgurt sind vorzugsweise in einem Bereich des Rotorblattes angeordnet, der der Saugseite zugewandt ist.

Entgegen der in der Regel vorgesehenen Anordnung von zwei Holmgurten im Rotorblatt, wobei vorzugsweise ein Holmgurt an der Druckseite und ein Holmgurt an der Saugseite angeordnet ist, sind erfindungsgemäß mindestens drei Holmgurte vorgesehen. Durch das Vorsehen von drei Holmgurten, insbesondere von zwei Holmgurten im Bereich der Druckseite und von einem Holmgurt im Bereich der Saugseite oder von zwei Holmgurten im Bereich der Saugseite und von einem Holmgurt im Bereich der Druckseite oder auch von zwei oder mehreren Holmgurten im Bereich der Druckseite und/oder im Bereich der Saugseite, können die Holmgurte mindestens einer Seite, also von der Druckseite und/oder der Saugseite, jeweils voneinander beabstandet sein. Diese Beabstandung ist insbesondere in Richtung der Querrichtung vorgesehen, um die erfindungsgemäße Hebeöffnung zwischen zwei auf einer Seite angeordneten Holmgurten anzuordnen.

Erfindungsgemäß umfasst das Rotorblatt die Lasteinleitungsvorrichtung, die zwischen mindestens einem der Druckseitenholmgurte und mindestens einem der Saugseitenholmgurte angeordnet ist. Die Lasteinleitungsvorrichtung weist eine Erstreckung in Dickenrichtung auf, wobei die Lasteinleitungsvorrichtung zumindest mit einem oder mehreren Bereichen zwischen einem Druckseitenholmgurt und einem Saugseitenholmgurt angeordnet ist. Vorzugsweise ist die Erstreckung der Lasteinleitungsvorrichtung in Dickenrichtung geringer als der Abstand in Dickenrichtung des vorderen Druckseitenholmgurts von dem vorderen Saugseitenholmgurt und/oder als der Abstand in Dickenrichtung des hinteren Druckseitenholmgurts von dem hinteren Saugseitenholmgurt. Ferner vorzugsweise ist die Erstreckung der Lasteinleitungsvorrichtung in Dickenrichtung geringer als der Abstand in Dickenrichtung des einen Druckseitenholmgurts von dem vorderen und/oder dem hinteren Saugseitenholmgurt und/oder als der Abstand in Dickenrichtung des einen Saugseitenholmgurts von dem vorderen und/oder hinteren Druckseitenholmgurt. Vorzugsweise ist die Lasteinleitungsvorrichtung als Lasteinleitungsrippe ausgebildet.

Ferner vorzugsweise ist die Lasteinleitungsvorrichtung innerhalb des Holms und/oder innerhalb des Holmquerschnitts angeordnet. Die Anordnung der Lasteinleitungsvorrichtung in dem Holm kann entweder mit der vollständigen Lasteinleitungsvorrichtung oder lediglich teilweise erfolgen.

Ferner weist die Lasteinleitungsvorrichtung die Lastkopplungsvorrichtung auf. Durch die Lastkopplungsvorrichtung kann eine Kraft und/oder ein Moment in die Lasteinleitungsvorrichtung eingeleitet werden. Die Lastkopplungsvorrichtung der Lasteinleitungsvorrichtung ist angeordnet und ausgebildet, um ein Hebezeug aufzunehmen. Das Hebezeug, das nicht Teil des beanspruchten Gegenstands ist, kann beispielsweise eine Kette oder ein Seil sein.

Die Lasteinleitungsvorrichtung umfasst vorzugsweise einen Kunststoff oder besteht aus einem Kunststoff. Darüber hinaus kann die Lasteinleitungsvorrichtung aus einem Faserverbundmaterial bestehen oder dieses umfassen. Vorzugsweise umfasst das Faserverbundmaterial organische Fasern und/oder anorganische Fasern, wobei insbesondere Glasfasern und/oder Kohlefasern und/oder Aramidfasern bevorzugt sind. Ferner kann die Lasteinleitungsvorrichtung auch aus einem metallischen Material, vorzugsweise einem Stahl oder einer Stahllegierung und/oder einem Aluminium oder einer Aluminiumlegierung bestehen oder diese umfassen. Darüber hinaus ist es bevorzugt, dass die Lasteinleitungsvorrichtung aus Holz und/oder Keramik und/oder anderen technische Materialien besteht oder diese umfasst.

Ferner weist das Rotorblatt die Hebeöffnung an der Druck- und/oder Saugseite auf. Die Hebeöffnung kann zwischen dem vorderen Druckseitenholmgurt und dem hinteren Druckseitenholmgurt und/oder zwischen dem vorderen Saugseitenholmgurt und dem hinteren Saugseitenholmgurt angeordnet sein. Die Hebeöffnung ist vorzugsweise derart angeordnet, dass diese vorzugsweise nicht, auch nicht teilweise, durch einen der Holmgurte führt. Insbesondere resultiert das Einbringen der Hebeöffnung vorzugsweise nicht zu Kerbwirkungen an einem der Holmgurte. Da die Hebeöffnung vorzugsweise eine Durchtrittsrichtung aufweist, die parallel zur Dickenrichtung verläuft, kann die Hebeöffnung einen Zugang von der Außenseite des Rotorblattes zu der Lasteinleitungsvorrichtung ermöglichen, wenn die Hebeöffnung in Bezug auf die Längsrichtung die gleiche oder eine ähnliche Position aufweist wie die Lasteinleitungsvorrichtung.

Ferner vorzugsweise weist die Hebeöffnung eine Durchtrittsrichtung auf, die einen Richtungsanteil in Dickenrichtung und einen Richtungsanteil in Längsrichtung aufweist. Es ist möglich, ein durch die Hebeöffnung geführtes Hebezeug zu der Lasteinleitungsvorrichtung zu führen und somit das Hebezeug an der Lastkopplungsvorrichtung anzuordnen und vorzugsweise mit dieser zu verbinden. In einer vorteilhaften Ausgestaltung der Hebeöffnung weist diese vorzugsweise einen Querschnitt orthogonal zur Durchtrittsrichtung auf, der im Wesentlichen rund ist. Ferner vorzugsweise weist die Hebeöffnung einen ovalen, und/oder schlitzförmigen, und/oder dreieckigen, und/oder viereckigen, und/oder mehreckigen Querschnitt auf. Darüber hinaus kann der Querschnitt auch weitere vorteilhafte Ausgestaltungen aufweisen, wie beispielsweise ein zahnförmiges Profil an einer Innenumfangsfläche der Hebeöffnung.

Der Erfindung liegt unter anderem die Erkenntnis zu Grunde, dass bei existierenden Rotorblättern die Holmgurte in der Regel entlang einer Schwerelinie in Längsrichtung des Rotorblatts angeordnet sind. Daher ist eine Befestigung eines Hebezeugs im Bereich der Schwerelinie bei konventionellen Rotorblättern meist nicht zu erreichen, da dies mindestens eine Öffnung in einem Holmgurt voraussetzen würde. Eine Öffnung an beziehungsweise in dem Holmgurt würde jedoch zu erhöhten Spannungen wegen Kerbwirkungen führen, die die Festigkeit des Holmgurtes reduzieren können. Der Holmgurt ist ein integrales festigkeitsgebendes Element des Rotorblatts und sollte vorzugsweise nicht mit derartigen Kerbwirkungen belastet werden. Daher wird in der Regel bei existierenden Rotorblättern eine Hebeöffnung in einem Bereich angeordnet, an dem kein Holmgurt angeordnet ist. Da die Holmgurte existierender Rotorblätter jedoch in der Regel entlang der Schwerelinie verlaufen, wird bzw. werden vorzugsweise bei bestehenden Lösungen eine, zwei oder mehrere Hebeöffnungen außerhalb der Schwerelinie angeordnet, z.B. in einem Bereich angrenzend an die Vorderkante und/oder in einem Bereich angrenzend an die Endkante des Rotorblattes.

Bedingt durch die Lage des Schwerpunktes beziehungsweise der Schwerelinie in Längsrichtung des Rotorblattes, können die Hebeöffnungen und/oder assoziierende Lasteinleitungsvorrichtungen bei existierenden Rotorblättern in der Regel nicht in der Schwerelinie beziehungsweise im Schwerpunkt des Rotorblattes angeordnet werden, sondern mit einem Abstand zu der Schwerelinie beziehungsweise zum Schwerpunkt. Durch den Abstand der Hebeöffnung und/oder der Lasteinleitungsvorrichtung zu der Schwerelinie beziehungsweise dem Schwerpunkt des Rotorblattes entsteht beim Anheben des Rotorblattes mit einem Hebezeug, welches durch die Hebeöffnung zur Lasteinleitungsvorrichtung geführt ist, ein Moment. Dieses Moment ist insbesondere durch den Abstand der Schwerelinie von einem Kraftangriffspunkt zu erklären. Durch dieses Moment kann sich das Rotorblatt in ungewünschte Positionen drehen, wenn dieses durch ein Hebezeug angehoben wird. Darüber hinaus kann bei dem Positionieren während einer Montage des Rotorblattes eine geringere Positioniergenauigkeit festgestellt werden. Durch die Verdrehung um eine Längsachse kann sich die Windangriffsfläche vergrößern und daraus wiederum können niedrigere zulässige Aufbauwindgeschwindigkeiten resultieren. Darüber hinaus kann die Stabilität während der Montage reduziert werden.

### geänderte Beschreibungsseite 9 (Reinschrift)

Durch das erfindungsgemäße Rotorblatt kann nun die Lasteinleitungsvorrichtung und/oder die Hebeöffnung in der Schwerelinie des Rotorblattes angeordnet werden und das zuvor genannte Moment bei dem Anheben des Rotorblattes vermindert oder beseitigt werden, was die Stabilität und/oder Sicherheit beim Transport und/oder der Montage verbessert und/oder den Transport und/oder die Montage vereinfacht bzw. verbessert. Im Gegensatz zu einer Anordnung der Hebeöffnung in beziehungsweise an einem Holmgurt und er damit verbundenen Schwächung des Holmgurtes, kann somit eine verbesserte Festigkeit der Holmgurte erreicht werden. Durch diese verbesserte Festigkeit der Holmgurte kann einerseits Material für die Holmgurte eingespart werden und/oder es kann ein geringeres Materialvolumen eingesetzt werden, sodass das Gewicht des beziehungsweise der Holmgurte reduziert wird.

Das Rotorblatt umfasst einen vorderen Holmsteg und/oder einen hinteren Holmsteg, wobei die Lasteinleitungsvorrichtung an dem vorderen Holmsteg und/oder dem hinteren Holmsteg angeordnet ist. Vorzugsweise erstrecken sich der vordere Holmsteg und/oder der hintere Holmsteg mit ihrer Haupterstreckungsrichtung bzw. ihren Haupterstreckungsrichtungen in der Längsrichtung. Die Holmstege weisen vorzugsweise ebenfalls eine flächige Erstreckung auf, wobei die flächige Erstreckung der Holmstege vorzugsweise orthogonal zur flächigen Erstreckung der Holmgurte verläuft. Durch die mindestens drei Holmgurte sowie einen vorderen und einen hinteren Holmsteg wird vorzugsweise der Holm gebildet. In Bezug auf eine Umfangsfläche kann dieser Holm auch als nicht geschlossen angesehen werden, da beim Vorsehen von zwei Holmgurten in einem Bereich angrenzend an die Druckseite, insbesondere des vorderen Druckseitenholmgurts und des hinteren Druckseitenholmgurts, diese voneinander beabstandet sind und/oder weil beim Vorsehen von zwei Holmgurten in einem Bereich angrenzend an die Saugseite, insbesondere der vordere Saugseitenholmgurt und der hintere Saugseitenholmgurt, voneinander beabstandet sind. Die Holmgurte gewährleisten vorzugsweise eine Festigkeit des Rotorblattes in Längsrichtung und die Holmstege gewährleisten vorzugsweise eine Festigkeit gegen Biegung und/oder Torsion. Der Zwischenraum zwischen den Holmgurten der Druckseite und/oder der Saugseite können vorzugsweise mit einem Material geschlossen werden.

Gemäß einer weiteren bevorzugten Ausführungsvariante des Rotorblattes ist vorgesehen, dass der vordere Druckseitenholmgurt und/oder der vordere Saugseitenholmgurt an dem vorderen Holmsteg befestigt ist beziehungsweise sind. Dabei ist der vordere Holmsteg vorzugsweise der Vorderkante des Rotorblattes zugewandt. In einer weiteren besonders bevorzugten Ausführungsvariante ist vorgesehen, dass der hintere Druckseitenholmgurt und/oder der hintere Saugseitenholmgurt an dem hinteren Holmsteg befestigt ist beziehungsweise sind. Dabei ist der hintere Holmsteg vorzugsweise der Endkante des Rotorblatts zugewandt.

In einer weiteren besonders bevorzugten Ausführungsvariante des Rotorblatts ist vorgesehen, dass eine erste Querbeabstandung zwischen dem vorderen Druckseitenholmgurt und dem hinteren Druckseitenholmgurt und/oder eine zweite Querbeabstandung zwischen dem vorderen Saugseitenholmgurt und dem hinteren Saugseitenholmgurt eine größere und/oder gleiche Abmessung in Querrichtung aufweist beziehungsweise aufweisen als beziehungsweise wie die Abmessung der Hebeöffnung in Querrichtung. Durch diese Abmessung der Hebeöffnung wird insbesondere gewährleistet, dass durch das Einbringen und/oder Vorsehen der Hebeöffnung vorzugsweise kein oder ein geringer Materialabtrag an einem Holmgurt beziehungsweise an zwei, mehreren oder allen Holmgurten erfolgt. Dies ist insbesondere bevorzugt, da die Holmgurte durch einen Materialabtrag und/oder eine dadurch entstehende Kerbwirkung geschwächt werden können.

Gemäß einer bevorzugten Ausführungsvariante des Rotorblattes ist vorgesehen, dass die Lasteinleitungsvorrichtung in Querrichtung zwischen dem vorderen Holmsteg und dem hinteren Holmsteg angeordnet ist. Die Lasteinleitungsvorrichtung ist in dieser Ausführungsvariante vorzugsweise innerhalb eines Holmes angeordnet. Dieser Holm wird durch die mindestens drei oben beschriebenen Holmgurte sowie dem vorderen und dem hinteren Holmsteg gebildet. Die Lasteinleitungsvorrichtung kann hier neben einer möglichen Befestigung an den Holmgurten zusätzlich an dem vorderen und/oder dem hinteren Holmsteg befestigt werden. Somit kann eine hohe Festigkeit der Verbindung der Lasteinleitungsvorrichtung mit den übrigen Elementen des Rotorblattes erreicht werden.

Gemäß einer weiteren bevorzugten Ausführungsvariante des Rotorblattes ist vorgesehen, dass eine im Wesentlichen parallel zur Längsrichtung ausgerichtete Schwerelinie des Rotorblattes sich durch die Lasteinleitungsvorrichtung erstreckt. Die Schwerelinie ist eine Gerade, die durch den Schwerpunkt des Rotorblattes verläuft und im Wesentlichen parallel zur Längsrichtung verläuft. Durch die Erstreckung der Schwerelinie durch die Lasteinleitungsvorrichtung und ferner vorzugsweise durch die Lastkopplungsvorrichtung kann bei einem Anheben des Rotorblattes mit einem Hebezeug, ein Anheben an der Schwerelinie ermöglicht werden, sodass bei dem Anheben kein oder ein vermindertes bzw. geringes Moment in das Rotorblatt eingeleitet wird.

Gemäß einer weiteren bevorzugten Ausführungsvariante des Rotorblatts ist vorgesehen, dass die Lastkopplungsvorrichtung als eine Lasteinleitungsöffnung ausgebildet ist, die im Wesentlichen orthogonal zur Dicke, vorzugsweise im Wesentlichen in Längsrichtung, angeordnet ist. Die Lasteinleitungsöffnung ist vorzugsweise als eine Durchgangsöffnung ausgebildet, die sich durch die gesamte Lasteinleitungsvorrichtung erstreckt. Alternativ vorzugsweise ist die Lasteinleitungsöffnung in der Lasteinleitungsvorrichtung als Sackloch ausgebildet. Vorzugsweise ist die Lasteinleitungsöffnung derart gestaltet, dass in diese ein Bolzen eingeführt werden kann. Die Mittelachse der Lasteinleitungsöffnung erstreckt sich insbesondere orthogonal zur Dicke. Somit kann sich die Lasteinleitungsöffnung zudem auch im Wesentlichen in Richtung der Längserstreckung erstrecken. Weiterhin kann es vorteilhaft sein, dass die Lasteinleitungsöffnung der Lasteinleitungsvorrichtung parallel zur Dicke angeordnet ist.

In einer weiteren bevorzugten Ausführungsvariante des Rotorblatts ist vorgesehen, dass die Schwerelinie durch die Hebeöffnung und/oder die Lastkopplungsvorrichtung hindurch führt. Dies bedeutet insbesondere, dass die Schwerelinie sich durch ein Teil der Hebeöffnung und/oder durch ein Teil der Lastkopplungsvorrichtung erstreckt. Insbesondere ist es bevorzugt, dass die Mittelachse der Lastkopplungsvorrichtung, insbesondere der Lasteinleitungsöffnung, koaxial zur Schwerelinie des Rotorblattes angeordnet ist.

Gemäß einer weiteren besonders bevorzugten Ausführungsvariante des Rotorblatts ist vorgesehen, dass ein Zwischenraum zwischen dem vorderen Druckseitenholmgurt und/oder dem hinteren Druckseitenholmgurt und/oder dem vorderen Druckseitenholmgurt und/oder dem hinteren Saugseitenholmgurt zumindest teilweise mit einem ersten Material, vorzugsweise einem Balsaholz und/oder einem Schaum, gefüllt ist, welches eine geringere Dichte und/oder Festigkeit bzw. Steifigkeit aufweist als das Material der Druckseitenholmgurte und/oder der Saugseitenholmgurte. Das erste Material umfasst vorzugsweise Polyethylenterephthalat, auch als PET bezeichnet, und/oder Polyvinylchlorid, auch als PVC bezeichnet, oder besteht aus diesem bzw. aus diesen. Für einen Bereich des Zwischenraums angrenzend an die Hebeöffnung ist vorzugsweise vorgesehen, dass dieser Bereich ein Material umfasst oder aus einem Material besteht, das ein multiaxiales Gelege umfasst. Mit dem ersten Material wird bzw. werden insbesondere die erste Querbeabstandung und/oder die zweite Querbeabstandung ausgefüllt. In diesem Material kann die Hebeöffnung angeordnet werden.

Gemäß einer weiteren besonders bevorzugten Ausführungsvariante des Rotorblattes umfasst dieses zwei oder mehrere Lasteinleitungsvorrichtungen, und/oder zwei oder mehrere Hebeöffnungen, wobei die zwei oder mehreren Lasteinleitungsvorrichtungen und/oder die zwei oder mehreren Hebeöffnungen gemäß mindestens einer der im Vorherigen beschriebenen Ausführungsvarianten angeordnet sind. Vorzugsweise sind eine, zwei oder mehrere weitere Lasteinleitungsrippen in einem Bereich angrenzend an die Vorderkante und/oder in einem Bereich angrenzend an die Endkante angeordnet.

Insbesondere ist die Ausführungsvariante mit zwei Hebeöffnungen und zwei Lasteinleitungsvorrichtungen bevorzugt. Vorzugsweise sind eine erste Lasteinleitungsvorrichtung und eine korrespondierende erste Hebeöffnung in einem Bereich angeordnet, der zwischen dem Schwerpunkt des Rotorblattes und dem Wurzelbereich liegt. Darüber hinaus bevorzugt sind eine zweite Lasteinleitungsvorrichtung und eine korrespondierende zweite Hebeöffnung in einem Bereich angeordnet, der zwischen dem Schwerpunkt und der Blattspitze liegt. Besonders bevorzugt ist, dass die zuvor genannten Lasteinleitungsvorrichtungen und/oder Hebeöffnungen jeweils die gleiche Beabstandung von dem Schwerpunkt des Rotorblattes aufweisen. In dieser bevorzugten Ausführungsvariante besteht die Möglichkeit, ein Hebezeug durch die Hebeöffnungen hindurchzuführen und an den Lasteinleitungsvorrichtungen durch eine Lastkopplungsvorrichtung zu verbinden, und somit das Rotorblatt in einer waagerechten Position zu heben. Von dieser Position aus kann das Rotorblatt durch eine entsprechende Handhabung der Hebezeuge beliebig positioniert werden.

Gemäß einer weiteren besonders bevorzugten Ausführungsvariante des Rotorblattes umfasst dieses zwei oder mehrere Lastkopplungsvorrichtungen, die vorzugsweise als Lasteinleitungsöffnung angeordnet und ausgebildet sind, um zylindrische Kopplungselemente eines oder mehrerer Hebezeuge aufzunehmen. In dieser Ausführungsvariante werden die zylindrischen Kopplungselemente, welche beispielsweise als Stahlzylinder ausgebildet sind, vorzugsweise in die Lasteinleitungsöffnungen geführt. Bei der Nutzung eines Hebezeuges welches an einem Ende beispielsweise eine Schlaufe aufweist, diese Schlaufe einen größeren Innendurchmesser aufweist als die zuvor genannten zylindrischen Kopplungselemente einen Außendurchmesser aufweisen, kann eine bevorzugte Verbindung des Hebezeuges mit der Lasteinleitungsvorrichtung und/oder den Kopplungselementen erfolgen.

Gemäß einer weiteren besonders bevorzugten Ausführungsvariante des Rotorblattes ist vorgesehen, dass die Lasteinleitungsvorrichtung als Anschlusselement für ein Rotorblattenteisungssystem ausgebildet ist. Das Rotorblattenteisungssystem kann insbesondere Heizelemente, beispielsweise Heizrohre, umfassen, die insbesondere an der Lasteinleitungsvorrichtung angeordnet und/oder befestigt werden können.

Gemäß einem weiteren Aspekt der vorliegenden Erfindung wird die eingangs genannte Aufgabe gelöst durch eine Windenergieanlage mit mindestens einem Rotorblatt gemäß mindestens einer der im Vorherigen beschriebenen Ausführungsvarianten. Eine derartige Windenergieanlage zeichnet sich insbesondere dadurch aus, dass die Montage der Windenergieanlage einen geringeren Zeitaufwand, einen geringeren Personalaufwand und somit mit verminderten Kosten errichtet werden kann. Darüber hinaus kann eine derartige Windenergieanlage auch bei Wetterverhältnissen aufgestellt werden, bei denen es im Stand der Technik nicht mehr möglich ist oder lediglich unter erschwerten Bedingungen eine Windenergieanlage aufzubauen.

Gemäß einem weiteren Aspekt der vorliegenden Erfindung wird die eingangs genannte Aufgabe gelöst durch ein Verfahren zur Montage eines Rotorblattes, umfassend die Schritte Bereitstellen eines Rotorblatts, insbesondere eines Rotorblattes gemäß mindestens einer der im vorherigen beschriebenen Ausführungsvarianten, Hindurchführen eines Hebezeugs durch die Hebeöffnung, Befestigen des Hebezeugs an der Lasteinleitungsvorrichtung, vorzugsweise durch ein Anordnen eines Hebeelements in der Lasteinleitungsöffnung und Befestigen des Hebezeugs an dem Hebeelement, Anheben des Rotorblattes mit dem Hebezeug in eine Montageposition.

Gemäß einem weiteren Aspekt der vorliegenden Erfindung wird die eingangs genannte Aufgabe gelöst durch ein Verfahren zur Herstellung eines Rotorblattes, umfassend die Schritte Verbinden eines ersten Holmsteges mit mindestens einer Lasteinleitungsvorrichtung, Verbinden eines zweiten Holmsteges mit der mindestens einen Lasteinleitungsvorrichtung, Anordnen einer Baugruppe, umfassend den ersten Holmsteg, den zweiten Holmsteg und die mindestens eine Lasteinleitungsvorrichtung, an einem Rotorblattelement, insbesondere einer Außenschale, des Rotorblattes. Durch den Einbau dieser Baugruppe, kann das Ausrichten der Holmstege vereinfacht werden. Die Lasteinleitungsvorrichtung dient hier auch als eine Setz- und/oder Positionierungshilfe insbesondere für einen oder mehrere Holmstege. Somit können bei der Herstellung des Rotorblattes Zeit und/oder Kosten eingespart werden.

Die erfindungsgemäßen Verfahren weisen Merkmale beziehungsweise Verfahrensschritte auf, die sie insbesondere dafür geeignet machen, für ein erfindungsgemäßes Rotorblatt und seine Fortbildungen verwendet zu werden. Für weitere Vorteile, Ausführungsvarianten und Ausführungsdetails dieser weiteren Aspekte und ihrer möglichen Fortbildung wird auch auf die zuvor erfolgte Beschreibung zu den entsprechenden Merkmalen und Fortbildungen des Rotorblatts verwiesen.

Bevorzugte Ausführungsformen der Erfindung werden beispielhaft anhand der beiliegenden Figuren erläutert. Es zeigen:
- Figur 1:: eine schematische Ansicht einer beispielhaften Ausführungsform einer Windenergieanlage;
- Figur 2:: eine schematische längsgeschnittene Ansicht eines Ausschnitts einer beispielhaften Ausführungsform eines Rotorblattes;
- Figur 3a:: eine schematische geschnittene Ansicht einer beispielhaften Ausführungsform eines Holmes;
- Figur 3b:: eine schematische geschnittene Ansicht einer weiteren beispielhaften Ausführungsform eines Holmes;
- Figur 4:: eine geschnittene schematische Ansicht einer beispielhaften Ausführungsform einer Lasteinleitungsvorrichtung;
- Figur 5:: eine weitere schematische geschnittene Ansicht der Lasteinleitungsvorrichtung gemäß Figur 4.

In den Figuren sind gleiche oder im Wesentlichen funktionsgleiche oder -ähnliche Elemente mit den gleichen Bezugszeichen bezeichnet.

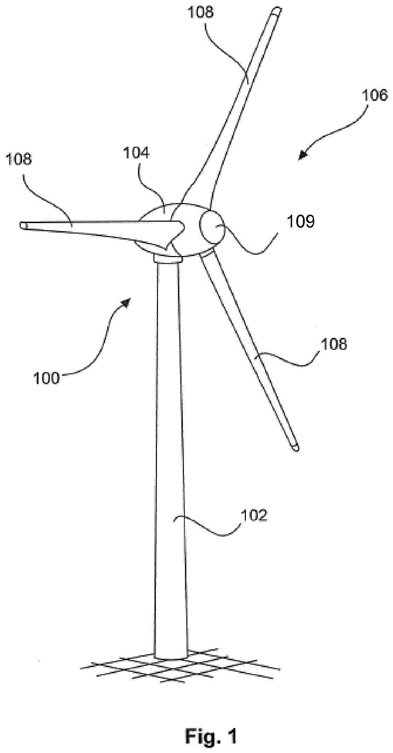

Figur 1 zeigt eine schematische Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 109 angeordnet. Der Rotor 106 wird im Betrieb durch den Wind in eine Drehbewegung versetzt und treibt dadurch einen Generator in der Gondel 104 an.

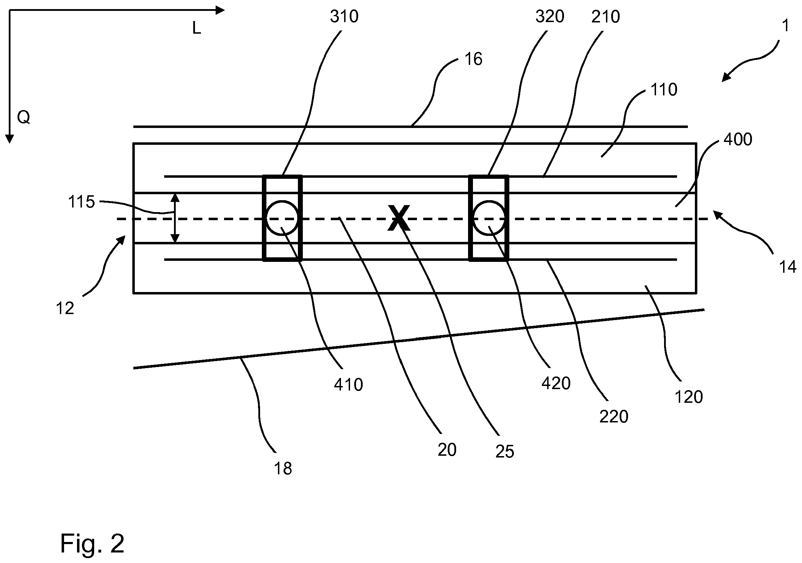

Figur 2 zeigt eine schematische längsgeschnittene Ansicht eines Ausschnitts einer beispielhaften Ausführungsform eines Rotorblattes. Der gezeigte Ausschnitt des Rotorblatts 1 erstreckt sich von einem rotorblattwurzelzugewandten Ende 12 bis zu einem rotorblattspitzenzugewandten Ende 14 in Längsrichtung L. In einer Querrichtung Q erstreckt sich das Rotorblatt 1 von einer Vorderkante 16 bis zu einer Endkante 18. Ferner weist das Rotorblatt 1 einen vorderen Druckseitenholmgurt 110 und einen hinteren Druckseitenholmgurt 120 auf. Der vordere Druckseitenholmgurt 110 ist der Vorderkante 16 zugewandt und der hintere Druckseitenholmgurt 120 ist der Endkante 18 zugewandt. Zwischen dem vorderen Druckseitenholmgurt 110 und dem hinteren Druckseitenholmgurt 120 befindet sich eine erste Querbeabstandung 115, wobei sich die Querbeabstandung 115 in Querrichtung Q erstreckt. Zwischen dem vorderen Druckseitenholmgurt 110 und dem hinteren Druckseitenholmgurt 120 ist innerhalb eines Bereiches der ersten Querbeabstandung 115 ein Kernmaterial 400 angeordnet. Die Druckseitenholmgurte 110, 120 sowie eine Mittelachse des Kernmaterials 400 erstrecken sich in einer Haupterstreckungsrichtung im Wesentlichen parallel zur Vorderkante 16. Ein vorderer Holmsteg 210 und ein hinterer Holmsteg 220 erstrecken sich ebenfalls jeweils mit ihrer Haupterstreckungsrichtung parallel zur Vorderkante 16.

An dem vorderen Druckseitenholmgurt 110 und an dem hinteren Druckseitenholmgurt 120 sind eine erste Lasteinleitungsvorrichtung 310 und eine zweite Lasteinleitungsvorrichtung 320 eingeordnet. Die erste Lasteinleitungsvorrichtung 310 und die zweite Lasteinleitungsvorrichtung 320 sind ferner zwischen dem vorderen Holmsteg 210 und dem hinteren Holmsteg 220 angeordnet, wobei eine Befestigung der Lasteinleitungsvorrichtung 310, 320 an den Holmstegen 210, 220 bevorzugt ist. In Bezug auf die Längsrichtung L und die Querrichtung Q ist mittig von der ersten Lasteinleitungsvorrichtung 310 eine erste Hebeöffnung 410 angeordnet. Die Durchtrittsrichtung der Hebeöffnung 410 verläuft in einer Dickenrichtung, welche orthogonal zur Längsrichtung L und orthogonal zur Querrichtung Q ausgerichtet ist. Orthogonal zur Durchtrittsrichtung weist die Hebeöffnung 410 einen im Wesentlichen runden Querschnitt auf. Die zweite Lasteinleitungsvorrichtung 320 weist analog zur ersten Lasteinleitungsvorrichtung 310 eine zweite Hebeöffnung 420 auf, die im Wesentlichen die gleichen Eigenschaften aufweist wie die erste Hebeöffnung 410. Ferner erstreckt sich in Längsrichtung L eine Schwerelinie 20 des Rotorblattes 1. Die Schwerelinie 20 verläuft insbesondere durch den Schwerpunkt 25 des Rotorblattes. In Längsrichtung weisen die erste Lasteinleitungsvorrichtung 310 und die zweite Lasteinleitungsvorrichtung 320 sowie die korrespondierenden Hebeöffnungen 410, 420 eine Beabstandung von dem Schwerpunkt 25 auf. In Querrichtung Q weisen Mittelpunkte der ersten Lasteinleitungsvorrichtung 310 und der zweiten Lasteinleitungsvorrichtung 320 sowie der korrespondierenden Hebeöffnungen 410, 420 im Wesentlichen keine Beabstandung von dem Schwerpunkt 25 auf.

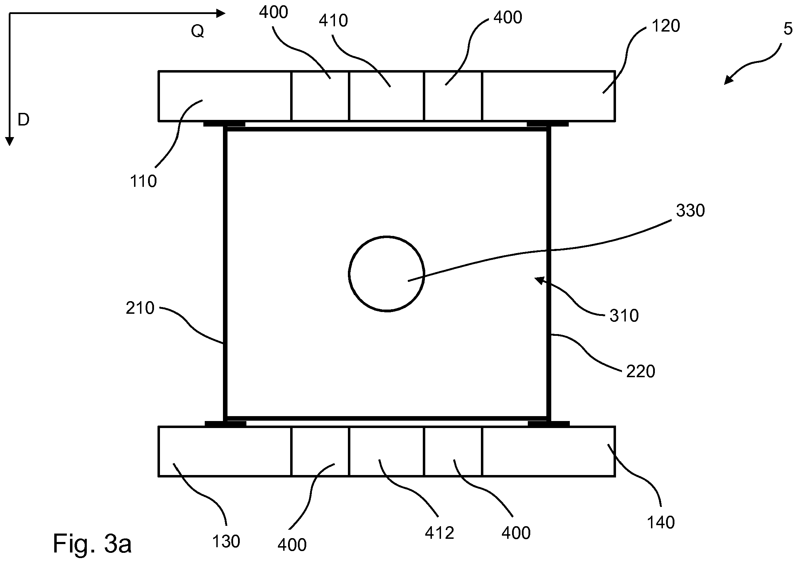

Figur 3a zeigt eine schematische geschnittene Ansicht einer beispielhaften Ausführungsform eines Holmes. Der Holm 5 weist einen vorderen Druckseitenholmgurt 110, einen hinteren Druckseitenholmgurt 120, einen vorderen Saugseitenholmgurt 130 und einen hinteren Saugseitenholmgurt 140 auf. Zwischen dem vorderen Druckseitenholmgurt 110 und dem vorderen Saugseitenholmgurt 130 ist der vordere Holmsteg 210 angeordnet. Vorzugsweise sind die vorderen Holmgurte 110, 130 mit dem vorderen Holmsteg 210 verbunden. Zwischen dem hinteren Druckseitenholmgurt 120 und dem hinteren Saugseitenholmgurt 140 ist der hintere Holmsteg 220 angeordnet. Zwischen dem vorderen Holmsteg 210 und dem hinteren Holmsteg 220 sowie zwischen den vier Holmgurten 110, 120, 130, 140 ist zudem die erste Lasteinleitungsvorrichtung 310 angeordnet, welche in Bezug auf die Querrichtung und die Dickenrichtung jeweils etwa in der Mitte eine erste Lasteinleitungsöffnung 330 aufweist. Zwischen den Druckseitenholmgurten 110, 120 ist das Kernmaterial 400 angeordnet. In dieser geschnittenen Ansicht ist dargestellt, dass im Bereich der Lasteinleitungsvorrichtung 310 die erste Hebeöffnung 410 in dem Kernmaterial 400 angeordnet ist. Die erste Hebeöffnung 410 befindet sich zwischen dem vorderen und dem hinteren Druckseitenholmgurt 110, 120. Zwischen dem vorderen Saugseitenholmgurt und dem hinteren Saugseitenholmgurt ist ebenfalls ein Kernmaterial 400 angeordnet, dass vorliegend in dem gezeigten Bereich eine dritte Hebeöffnung 412 aufweist.

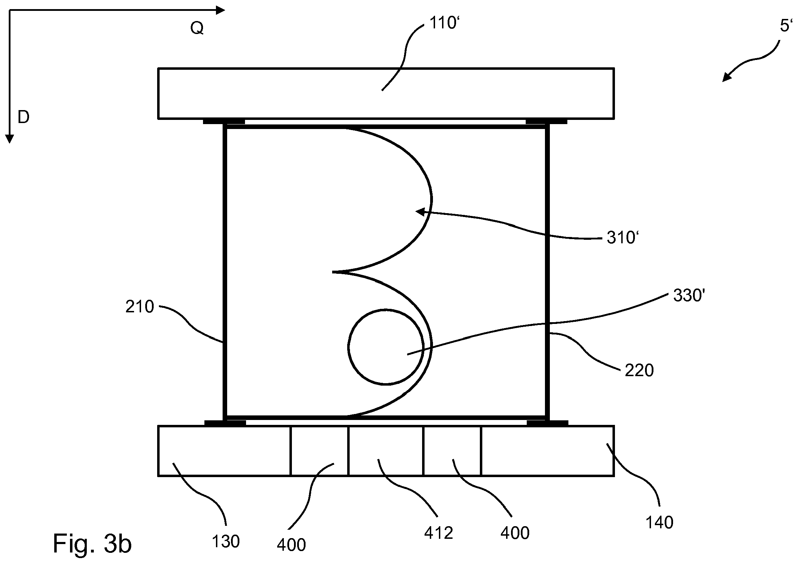

Figur 3b zeigt eine weitere Variante eines Holms 5' mit einer Lasteinleitungsvorrichtung 310`, welche zwischen einem vorderen und einem hinteren Holmsteg 210, 220 angeordnet ist. Im Gegensatz zum im Vorherigen beschriebenen Holm 5 unterscheidet sich der Holm 5` insbesondere durch den B-förmigen Querschnitt der Lasteinleitungsvorrichtung 310' und ferner dadurch, dass auf der druckseitenzugewandten Seite des Holms 5` lediglich ein einziger Druckseitenholmgurt 110' angeordnet ist. Dieser Druckseitenholmgurt 110' weist in Querrichtung die gleiche Erstreckung auf, wie die Summe der Erstreckungen in Querrichtung des vorderen und hinteren Saugseitenholmgurt 130, 140 und des Kernmaterials 400, welches in Querrichtung zwischen dem vorderen und hinteren Saugseitenholmgurt 130, 140 angeordnet ist.

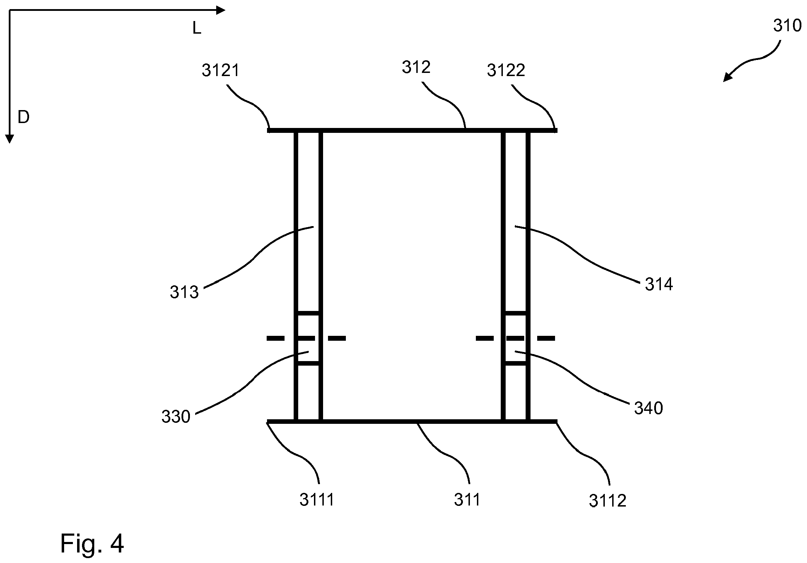

Figur 4 zeigt eine geschnittene schematische Ansicht einer beispielhaften Ausführungsform einer Lasteinleitungsvorrichtung. Die erste Lasteinleitungsvorrichtung 310 erstreckt sich in Dickenrichtung D von einer Kopfplatte 312 bis zu einer Fußplatte 311. Die Kopfplatte 312 erstreckt sich in Längsrichtung L von einer ersten Kante 3121 zu einer zweiten Kannte 3122. Die Fußplatte erstreckt sich von einer ersten Kante 3111 bis zu einer zweiten Kante 3112. Zwischen der Kopfplatte 312 und der Fußplatte 311 erstrecken sich in Dickenrichtung D die erste Seitenwand 313 und die zweite Seitenwand 314. Die erste Seitenwand 313 ist an der Kopfplatte in einem Bereich angrenzend an die erste Kante 3121 und an der Fußplatte in einem Bereich angrenzend an die erste Kante 3111 angeordnet. Auf der in Längsrichtung L gegenüberliegenden Seite der ersten Lasteinleitungsvorrichtung 310 ist die zweite Seitenwand 314 an der Kopfplatte 312 an einem Bereich angrenzend an die zweite Kante 3122 angeordnet. An der Fußplatte 311 ist die zweite Seitenwand 314 an einem Bereich angrenzend an die zweite Kante 3112 angeordnet. In der ersten Seitenwand 313 ist eine erste Lasteinleitungsöffnung 330 angeordnet, deren Durchtrittsrichtung im Wesentlichen parallel zur Längsrichtung L ausgerichtet ist. In der zweiten Seitenwand 314 ist eine zweite Lasteinleitungsöffnung 340 koaxial zur ersten Lasteinleitungsöffnung 330 angeordnet.

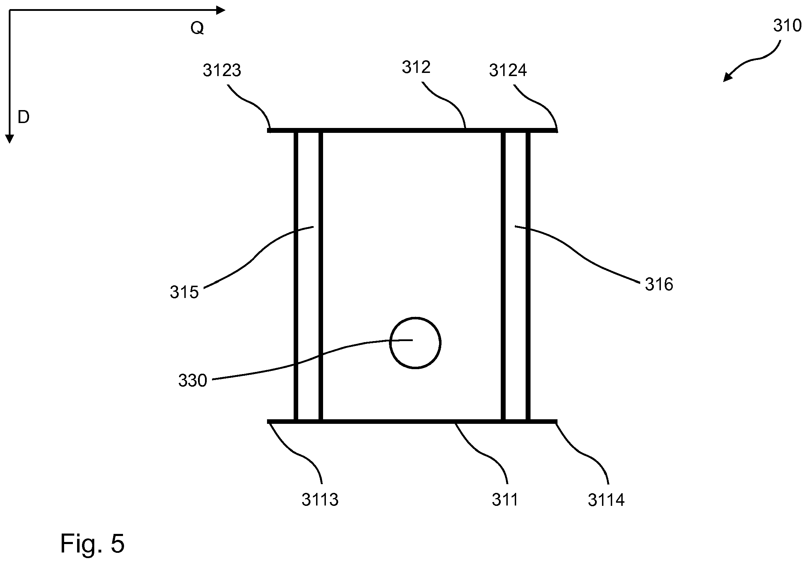

Figur 5 zeigt eine weitere schematische geschnittene Ansicht der Lasteinleitungsvorrichtung gemäß Figur 4. Die erste Lasteinleitungsvorrichtung 310 weist im Bereich von zwei weiteren jeweils gegenüberliegenden Kanten 3123, 3113 der Kopfplatte 312 und der Fußplatte 311 eine dritte Seitenwand 315 auf. An der gegenüberliegenden Seite der Kopfplatte 312 und der Fußplatte 311 ist an zwei gegenüberliegenden Kanten 3124, 3114 eine vierte Seitenwand 316 angeordnet. In dieser Darstellung ist die bereits in Figur 4 gezeigte erste Lasteinleitungsöffnung 330 in einer Draufsicht gezeigt.

Eine weitere beispielhafte Lasteinleitungsvorrichtung kann auch lediglich an einem der Holmstege befestigt sein und sich in Richtung des zweien Holmstegs erstrecken. Beispielsweise kann die Lasteinleitungsvorrichtung in einer Ansicht als "B"-förmig ausgebildet sein. Vorzugsweise ist jedoch auch bei einer solchen Ausgestaltung der Lasteinleitungsvorrichtung eine Lastkopplungsvorrichtung im Schwerpunkt und/oder an einer Schwerelinie des Rotorblatts angeordnet.

Das gezeigte Rotorblatt 1 kann in einer vorteilhaften Weise an einer Nabe und/oder einem Blattadapter einer Windenergieanlage 100 befestigt werden. Durch die Anordnung von vorzugsweise vier Holmgurten, jeweils zwei in Querrichtung beabstandeten Holmgurten auf der Druckseite und auf der Saugseite, besteht die Möglichkeit, ein Hebezeug durch die Hebeöffnung 410, 412, 420 zur Lasteinleitungsvorrichtung 310, 320 zu führen und einen Kraftangriffspunkt eines Hebezeugs im Bereich einer Schwerelinie es Rotorblatts vorzusehen. Dies kann ebenfalls erreicht werden, indem insgesamt drei Holmgurte angeordnet werden, wobei entweder auf der Druckseite oder der Saugseite ein einzelner Holmgurt angeordnet wird und das Hebezeug lediglich von der Seite zur Lasteinleitungsvorrichtung 310, 310', 320 geführt werden kann, auf der zwei Holmgurte mit einer entsprechenden Beabstandung angeordnet sind.

Das Rotorblatt kann somit verbessert angehoben werden und in eine Montageposition gebracht werden. Dies erfolgt beispielsweise indem ein Hebezeug mit einer Schlaufe an einem Ende durch eine der Hebeöffnungen 410, 412, 420 geführt wird und in einen Bereich zwischen der ersten Seitenwand 313 und der zweiten Seitenwand 314 sowie der dritten Seitenwand 315 und der vierten Seitenwand 316 der Lasteinleitungsvorrichtung 310 geführt wird und insbesondere ein Mittelpunkt der Schlaufe koaxial zu den ersten und zweiten Lasteinleitungsöffnung 330, 340 geführt wird, und im Anschluss ein Kopplungselement, beispielsweise ein Stahlbolzen zunächst durch die erste Lasteinleitungsöffnung 330, danach durch die Schlaufe des Hebezeugs und danach durch die zweite Lasteinleitungsöffnung 340 geführt wird. Somit ist ein Hebezeug an der Lasteinleitungsvorrichtung 310 befestigt, sodass eine Kraft auf diese ausgeübt werden kann. Da die Lasteinleitungsvorrichtung 310 vorzugsweise an einem oder beiden Holmstegen 210, 220 und/oder einem, zwei oder mehreren der Holmgurte 110, 120, 130, 140 befestigt ist, kann somit das Rotorblatt durch das Hebezeug angehoben werden.

### Bezugszeichen

- 1: Rotorblatt
- 5, 5`: Holm
- 12: rotorblattwurzelzugewandtes Ende
- 14: rotorblattspitzezugewandtes Ende
- 16: Vorderkante
- 18: Endkante
- 20: Rotorblattschwerelinie
- 25: Rotorblattschwerpunkt
- 100: Windenergieanlage
- 102: Turm
- 104: Gondel
- 106: Rotor
- 108: Rotorblätter
- 109: Spinner
- 110, 110`: vorderer Druckseitenholmgurt
- 115: erste Querbeabstandung
- 120: hinterer Druckseitenholmgurt
- 130: vorderer Saugseitenholmgurt
- 140: hinterer Saugseitenholmgurt
- 210: vorderer Holmsteg
- 220: hinterer Holmsteg
- 310, 310': erste Lasteinleitungsvorrichtung
- 311: Fußplatte
- 312: Kopfplatte
- 313: erste Seitenwand
- 314: zweite Seitenwand
- 315: dritte Seitenwand
- 316: vierte Seitenwand
- 320: zweite Lasteinleitungsvorrichtung
- 330, 330': erste Lasteinleitungsöffnung
- 340: zweite Lasteinleitungsöffnung
- 400: Kernmaterial
- 410: erste Hebeöffnung
- 412: dritte Hebeöffnung
- 420: zweite Hebeöffnung
- 3111: erste Kante Fußplatte
- 3112: zweite Kante Fußplatte
- 3113: dritte Kante Fußplatte
- 3114: vierte Kante Fußplatte
- 3121: erste Kante Kopfplatte
- 3122: zweite Kante Kopfplatte
- 3123: dritte Kante Kopfplatte
- 3124: vierte Kante Kopfplatte
- D: Dicke
- L: Längsrichtung
- Q: Querrichtung

## Patentansprüche

1. Rotorblatt (1) für eine Windenergieanlage (100) mit einer Längsrichtung (L) von einem Wurzelbereich zu einer Blattspitze, einer Querrichtung (Q) von einer Vorderkante (16) zu einer Endkante (18), einer Dicke (D) orthogonal zur Längsrichtung und orthogonal zur Querrichtung, sowie einer Druckseite und einer der Druckseite gegenüberliegenden Saugseite, umfassend
∘ einen vorderen Druckseitenholmgurt (110) und einen hinteren Druckseitenholmgurt (120) und
▪ einen vorderen Saugseitenholmgurt (130) und einen hinteren Saugseitenholmgurt (140),
- eine Lasteinleitungsvorrichtung (310, 320), welche zwischen mindestens einem der Druckseitenholmgurte (110, 120) und mindestens einem der Saugseitenholmgurte (130, 140) angeordnet ist, wobei
- die Lasteinleitungsvorrichtung eine Lastkopplungsvorrichtung (330, 340) aufweist, die angeordnet und ausgebildet ist, ein durch eine Hebeöffnung (410, 420) geführtes Hebezeug aufzunehmen,
- die Hebeöffnung an der Druck- und/oder Saugseite angeordnet ist, und
- die Hebeöffnung in Querrichtung zwischen dem vorderen Druckseitenholmgurt und dem hinteren Druckseitenholmgurt und/oder in Querrichtung zwischen dem vorderen Saugseitenholmgurt und dem hinteren Saugseitenholmgurt angeordnet ist,
wobei das Rotorblatt einen vorderen Holmsteg (210) und einen hinteren Holmsteg (220) umfasst, wobei die Lasteinleitungsvorrichtung (310, 320) an dem vorderen Holmsteg und dem hinterem Holmsteg angeordnet ist.

2. Rotorblatt (1) für eine Windenergieanlage (100) mit einer Längsrichtung (L) von einem Wurzelbereich zu einer Blattspitze, einer Querrichtung (Q) von einer Vorderkante (16) zu einer Endkante (18), einer Dicke (D) orthogonal zur Längsrichtung und orthogonal zur Querrichtung, sowie einer Druckseite und einer der Druckseite gegenüberliegenden Saugseite, umfassend
∘ einen vorderen Saugseitenholmgurt (130) und einen hinteren Saugseitenholmgurt (140) und
▪ einen Druckseitenholmgurt (110'),
- eine Lasteinleitungsvorrichtung (310`), welche zwischen dem Druckseitenholmgurt (110') und mindestens einem der Saugseitenholmgurte (130, 140) angeordnet ist, wobei
- die Lasteinleitungsvorrichtung eine Lastkopplungsvorrichtung (330`) aufweist, die angeordnet und ausgebildet ist, ein durch eine Hebeöffnung (410, 420) geführtes Hebezeug aufzunehmen,
- die Hebeöffnung an der Druck- und/oder Saugseite angeordnet ist, und
- die Hebeöffnung in Querrichtung zwischen dem vorderen Saugseitenholmgurt (130) und dem hinteren Saugseitenholmgurt (140) angeordnet ist,
wobei das Rotorblatt einen vorderen Holmsteg (210) und einen hinteren Holmsteg (220) umfasst und die Lasteinleitungsvorrichtung (310') an dem vorderen Holmsteg (210) angeordnet ist und einen B-förmigen Querschnitt aufweist, und wobei der Druckseitenholmgurt (110') in Querrichtung die gleiche Erstreckung aufweist, wie die Summe der Erstreckungen in Querrichtung des vorderen und hinteren Saugseitenholmgurts (130, 140) und des Kernmaterials (400), welches in Querrichtung zwischen dem vorderen und hinteren Saugseitenholmgurt (130, 140) angeordnet ist.

3. Rotorblatt (1) gemäß mindestens einem der vorhergehenden Ansprüche, wobei sich der vordere Holmsteg (210) und/oder der hintere Holmsteg (220) mit ihren Haupterstreckungsrichtungen in der Längsrichtung (L) erstrecken.

4. Rotorblatt (1) gemäß mindestens einem der vorhergehenden Ansprüche, wobei eine erste Querbeabstandung (115) zwischen dem vorderen Druckseitenholmgurt (110) und dem hinteren Druckseitenholmgurt (120) und/oder eine zweite Querbeabstandung zwischen dem vorderen Saugseitenholmgurt (130) und dem hinteren Saugseitenholmgurt (140) eine größere und/oder gleiche Abmessung in Querrichtung aufweist bzw. aufweisen als bzw. wie die Abmessung der Hebeöffnung (410, 420) in Querrichtung.

5. Rotorblatt (1) gemäß mindestens einem der vorhergehenden Ansprüche, wobei die Lasteinleitungsvorrichtung (310, 310', 320) in Querrichtung zwischen dem vorderen Holmsteg (210) und dem hinteren Holmsteg (220) angeordnet ist.

6. Rotorblatt (1) gemäß mindestens einem der vorhergehenden Ansprüche, wobei eine im Wesentlichen parallel zur Längsrichtung ausgerichtete Schwerelinie (20) des Rotorblatts sich durch die Lasteinleitungsvorrichtung (310, 310', 320) erstreckt.

7. Rotorblatt (1) gemäß mindestens einem der vorhergehenden Ansprüche, wobei die Lastkopplungsvorrichtung (330, 330`, 340) als eine Lasteinleitungsöffnung ausgebildet ist, die im Wesentlichen orthogonal zur Dicke (D), vorzugsweise im Wesentlichen in Längsrichtung, angeordnet ist.

8. Rotorblatt (1) gemäß mindestens einem der vorhergehenden Ansprüche, wobei die Schwerelinie (20) durch die Hebeöffnung (410, 420) und/oder die Lastkopplungsvorrichtung (330, 330', 340) hindurchführt.

9. Rotorblatt (1) gemäß mindestens einem der vorhergehenden Ansprüche, wobei ein Zwischenraum zwischen dem vorderen Druckseitenholmgurt (110, 110') und/oder dem hinterem Druckseitenholmgurt (120) und/oder dem vorderen Saugseitenholmgurt (130) und/oder dem hinteren Saugseitenholmgurt (140) zumindest teilweise mit einem ersten Material (400), vorzugsweise einem Balsaholz und/oder einem Schaum, insbesondere Polyethylenterephthalat und/oder Polyvinylchlorid, gefüllt ist, welches eine geringere Dichte und/oder Festigkeit aufweist als das Material der Druckseitenholmgurte und/oder der Saugseitenholmgurte.

10. Rotorblatt (1) gemäß mindestens einem der vorhergehenden Ansprüche, umfassend
- zwei oder mehrere Lasteinleitungsvorrichtungen (310, 310', 320), und/oder
- zwei oder mehrere Hebeöffnungen (410, 420),
wobei die zwei oder mehreren Lasteinleitungsvorrichtungen und/oder die zwei oder mehreren Hebeöffnungen gemäß mindestens einem der vorhergehenden Ansprüche angeordnet sind.

11. Rotorblatt (1) gemäß mindestens einem der vorhergehenden Ansprüche, umfassend zwei oder mehrere Lastkopplungsvorrichtungen (330, 330', 340), die vorzugsweise als Lasteinleitungsöffnung angeordnet und ausgebildet sind, um zylindrische Kopplungselemente eines oder mehrerer Hebezeuge aufzunehmen.

12. Rotorblatt (1) gemäß mindestens einem der vorhergehenden Ansprüche, wobei die Lasteinleitungsvorrichtung (310, 310`, 320) als Anschlusselement für ein Rotorblattenteisungssystem ausgebildet ist.

13. Windenergieanlage (100) mit mindestens einem Rotorblatt (1) gemäß mindestens einem der Ansprüche 1-12.

14. Verfahren zur Montage eines Rotorblattes (1), umfassend die Schritte
- Bereitstellen eines Rotorblatts gemäß mindestens einem der Ansprüche 1-12;
- Hindurchführen eines Hebezeugs durch die Hebeöffnung (410, 420);
- Befestigen des Hebezeugs an der Lasteinleitungsvorrichtung (310, 310', 320), vorzugsweise durch ein Anordnen eines Hebeelements in der Lasteinleitungsöffnung und Befestigen des Hebezeugs an dem Hebeelement;
- Anheben des Rotorblattes mit dem Hebezeug in eine Montageposition.

15. Verfahren zur Herstellung eines Rotorblattes (1) gemäß mindestens einem der Ansprüche 1-12, umfassend die Schritte
- Verbinden eines ersten Holmsteges (210) mit mindestens einer Lasteinleitungsvorrichtung (310, 310', 320);
- ggf Verbinden eines zweiten Holmsteges (220) mit der mindestens einen Lasteinleitungsvorrichtung;
- Anordnen einer Baugruppe, umfassend den ersten Holmsteg, ggf. den zweiten Holmsteg, und die mindestens eine Lasteinleitungsvorrichtung, an einem Rotorblattelement, insbesondere einer Außenschale, des Rotorblattes.

## Claims

1. A rotor blade (1) for a wind turbine (100) having a longitudinal direction (L) from a root region to a blade tip, a transverse direction (Q) from a leading edge (16) to a trailing edge (18), a thickness (D) orthogonally with respect to the longitudinal direction and orthogonally with respect to the transverse direction, and a pressure side and a suction side opposite the pressure side, comprising
- a front pressure-side spar cap (110) and a rear pressure-side spar cap (120) and
- a front suction-side spar cap (130) and a rear suction-side spar cap (140),
- a load introduction device (310, 320), which is arranged between at least one of the pressure-side spar caps (110, 120) and at least one of the suction-side spar caps (130, 140), wherein
- the load introduction device has a load coupling device (330, 340), which is arranged and designed so as to receive a lifting device passed through a lifting opening (410, 420),
- the lifting opening is arranged on the pressure side and/or the suction side, and
- the lifting opening is arranged between the front pressure-side spar cap and the rear pressure-side spar cap in the transverse direction and/or between the front suction-side spar cap and the rear suction-side spar cap in the transverse direction,
wherein the rotor blade comprises a front spar web (210) and a rear spar web (220), wherein the load introduction device (310, 320) is arranged on the front spar web and the rear spar web..

2. A rotor blade (1) for a wind turbine (100) having a longitudinal direction (L) from a root region to a blade tip, a transverse direction (Q) from a leading edge (16) to a trailing edge (18), a thickness (D) orthogonally with respect to the longitudinal direction and orthogonally with respect to the transverse direction, and a pressure side and a suction side opposite the pressure side, comprising
- a front suction-side spar cap (130) and a rear suction-side spar cap (140) and
- a pressure-side spar cap (110'),
- a load introduction device (310'), which is arranged between the pressure-side spar cap (110') and at least one of the suction-side spar caps (130, 140), wherein
- the load introduction device has a load coupling device (330'), which is arranged and designed so as to receive a lifting device passed through a lifting opening (410, 420),
- the lifting opening is arranged on the pressure side and/or the suction side, and
- the lifting opening is arranged between the front suction-side spar cap (130) and the rear suction-side spar cap (140) in the transverse direction,
wherein the rotor blade comprises a front spar web (210) and a rear spar web (220) and wherein the load introduction device (310') is arranged on the front spar web (210) and has a B-shaped cross section, and wherein the pressure-side spar cap (110') has the same extent in the transverse direction as the sum of the extents in the transverse direction of the front and the rear suction-side spar cap (130, 140) and of the core material (400), which is arranged between the front and the rear suction-side spar cap (130, 140) in the transverse direction.

3. The rotor blade (1) as claimed in at least one of the preceding claims, wherein the front spar web (210) and/or the rear spar web (220) extends/extend with the main directions of extent thereof in the longitudinal direction (L).

4. The rotor blade (1) as claimed in at least one of the preceding claims, wherein a first transverse spacing (115) between the front pressure-side spar cap (110) and the rear pressure-side spar cap (120) and/or a second transverse spacing between the front suction-side spar cap (130) and the rear suction-side spar cap (140) has or have a larger and/or the same dimension in the transverse direction than or as the dimension of the lifting opening (410, 420) in the transverse direction.

5. The rotor blade (1) as claimed in at least one of the preceding claims, wherein the load introduction device (310, 310', 320) is arranged between the front spar web (210) and the rear spar web (220) in the transverse direction.

6. The rotor blade (1) as claimed in at least one of the preceding claims, wherein a centroidal axis (20) of the rotor blade oriented substantially parallel to the longitudinal direction extends through the load introduction device (310, 310', 320).

7. The rotor blade (1) as claimed in at least one of the preceding claims, wherein the load coupling device (330, 330', 340) is designed as a load introduction opening, which is arranged substantially orthogonally to the thickness (D), preferably substantially in the longitudinal direction.

8. The rotor blade (1) as claimed in at least one of the preceding claims, wherein the centroidal axis (20) passes through the lifting opening (410, 420) and/or through the load coupling device (330, 330', 340).

9. The rotor blade (1) as claimed in at least one of the preceding claims, wherein an interspace between the front pressure-side spar cap (110, 110') and/or the rear pressure-side spar cap (120) and/or the front suction-side spar cap (130) and/or the rear suction-side spar cap (140) is filled at least partially with a first material (400), preferably a balsa wood and/or a foam, in particular polyethylene terephthalate and/or polyvinyl chloride, which has a lower density and/or strength than the material of the pressure-side spar caps and/or the suction-side spar caps.

10. The rotor blade (1) as claimed in at least one of the preceding claims, comprising
- two or more load introduction devices (310, 310', 320), and/or
- two or more lifting openings (410, 420),
wherein the two or more load introduction devices and/or the two or more lifting openings are arranged as claimed in at least one of the preceding claims.

11. The rotor blade (1) as claimed in at least one of the preceding claims, comprising two or more load coupling devices (330, 330', 340), which are preferably arranged and designed as load introduction openings in order to receive cylindrical coupling elements of one or more lifting devices.

12. The rotor blade (1) as claimed in at least one of the preceding claims, wherein the load introduction device (310, 310', 320) is designed as a connection element for a rotor blade deicing system.

13. A wind turbine (100) having at least one rotor blade (1) as claimed in at least one of claims 1-12.

14. A method for installing a rotor blade (1) comprising the following steps:
- providing a rotor blade as claimed in at least one of claims 1-12;
- passing a lifting device through the lifting opening (410, 420);
- securing the lifting device on the load introduction device (310, 310', 320), preferably by arranging a lifting element in the load introduction opening and securing the lifting device on the lifting element;
- raising the rotor blade into an installation position by means of the lifting device.

15. A method for producing a rotor blade (1) as claimed in at least one of the claims 1-12 comprising the following steps:
- connecting a first spar web (210) to at least one load introduction device (310, 310', 320);
- connecting a second spar web (220) to the at least one load introduction device;
- arranging a subassembly comprising the first spar web, where applicable, the second spar web and the at least one load introduction device on a rotor blade element, in particular an outer shell, of the rotor blade.

## Revendications

1. Pale de rotor (1) pour une éolienne (100) avec un sens longitudinal (L) depuis une zone d'emplanture à une pointe de pale, un sens transversal (Q) depuis un bord avant (16) à un bord d'extrémité (18), une épaisseur (D) de manière orthogonale par rapport au sens longitudinal et de manière orthogonale par rapport au sens transversal, ainsi qu'un côté de pression et un côté d'aspiration faisant face au côté de pression, comprenant
- une bride de longeron avant de côté de pression (110) et une bride de longeron arrière de côté de pression (120) et
- une bride de longeron avant de côté d'aspiration (130) et une bride de longeron arrière de côté d'aspiration (140),
- un dispositif d'application de charge (310, 320), lequel est disposé entre au moins une des brides de longeron de côté de pression (110, 120) et au moins une des brides de longeron de côté d'aspiration (130, 140), dans laquelle
- le dispositif d'application de charge présente un dispositif de couplage de charge (330, 340), qui est disposé et est réalisé pour recevoir un engin de levage guidé à travers une ouverture de levage (410, 420),
- l'ouverture de levage est disposée sur le côté de pression et/ou le côté d'aspiration, et
- l'ouverture de levage est disposée dans le sens transversal entre la bride de longeron avant de côté de pression et la bride de longeron arrière de côté de pression et/ou dans le sens transversal entre la bride de longeron avant de côté d'aspiration et la bride de longeron arrière de côté d'aspiration,
dans laquelle la pale de rotor comprend une entretoise avant de longeron (210) et une entretoise arrière de longeron (220), dans laquelle le dispositif d'application de charge (310, 320) est disposé sur l'entretoise avant de longeron et l'entretoise arrière de longeron.

2. Pale de rotor (1) pour une éolienne (100) avec un sens longitudinal (L) depuis une zone d'emplanture à une pointe de pale, un sens transversal (Q) depuis un bord avant (16) à un bord d'extrémité (18), une épaisseur (D) de manière orthogonale au sens longitudinal et de manière orthogonale au sens transversal, ainsi qu'un côté de pression et un côté d'aspiration faisant face au côté de pression, comprenant
- une bride de longeron avant de côté d'aspiration (130) et une bride de longeron arrière de côté d'aspiration (140), et
- une bride de longeron de côté de pression (110'),
- un dispositif d'application de charge (310'), lequel est disposé entre la bride de longeron de côté de pression (110') et au moins une des brides de longeron de côté d'aspiration (130, 140), dans laquelle
- le dispositif d'application de charge présente un dispositif de couplage de charge (330'), qui est disposé et est réalisé pour recevoir un engin de levage guidé à travers une ouverture de levage (410, 420),
- l'ouverture de levage est disposée sur le côté de pression et/ou le côté d'aspiration, et
- l'ouverture de levage est disposée dans le sens transversal entre la bride de longeron avant de côté d'aspiration (130) et la bride de longeron arrière de côté d'aspiration (140),
dans laquelle la pale de rotor comprend une entretoise avant de longeron (210) et une entretoise arrière de longeron (220) et le dispositif d'application de charge (310') est disposé sur l'entretoise avant de longeron (210), et
présente une section transversale en forme de B, et dans laquelle la bride de longeron de côté de pression (110') présente dans le sens transversal la même extension que la somme des extensions dans le sens transversal de la bride de longeron avant de côté d'aspiration et de la bride de longeron arrière de côté d'aspiration (130, 140) et du matériau central (400), lequel est disposé dans le sens transversal entre la bride de longeron avant et la bride de longeron arrière de côté d'aspiration (130, 140).

3. Pale de rotor (1) selon au moins l'une quelconque des revendications précédentes, dans laquelle l'entretoise avant de longeron (210) et/ou l'entretoise arrière de longeron (220) s'étendent par leur sens d'extension principal dans le sens longitudinal (L).

4. Pale de rotor (1) selon au moins l'une quelconque des revendications précédentes, dans laquelle un premier espacement transversal (115) entre la bride de longeron avant de côté de pression (110) et la bride de longeron arrière de côté de pression (120) et/ou un deuxième espacement transversal entre la bride de longeron avant de côté d'aspiration (130) et la bride de longeron arrière de côté d'aspiration (140) présentent une dimension plus grande et/ou identique dans le sens transversal que la ou à la dimension de l'ouverture de levage (410, 420) dans le sens transversal.

5. Pale de rotor (1) selon au moins l'une quelconque des revendications précédentes, dans laquelle le dispositif d'application de charge (310, 310', 320) est disposé dans le sens transversal entre l'entretoise avant de longeron (210) et l'entretoise arrière de longeron (220).

6. Pale de rotor (1) selon au moins l'une quelconque des revendications précédentes, dans laquelle une médiane (20) orientée de manière sensiblement parallèle par rapport au sens longitudinal de la pale de rotor s'étend à travers le dispositif d'application de charge (310, 310', 320).

7. Pale de rotor (1) selon au moins l'une quelconque des revendications précédentes, dans laquelle le dispositif de couplage de charge (330, 330', 340) est réalisé en tant qu'une ouverture d'application de charge, qui est disposée de manière sensiblement orthogonale par rapport à l'épaisseur (D), de préférence sensiblement dans le sens longitudinal.

8. Pale de rotor (1) selon au moins l'une quelconque des revendications précédentes, dans laquelle la médiane (20) traverse l'ouverture de levage (410, 420) et/ou le dispositif de couplage de charge (330, 330', 340) de part en part.

9. Pale de rotor (1) selon au moins l'une quelconque des revendications précédentes, dans laquelle un espace intermédiaire entre la bride de longeron avant de côté de pression (110, 110') et/ou la bride de longeron arrière de côté de pression (120) et/ou la bride de longeron avant de côté d'aspiration (130) et/ou la bride de longeron arrière de côté d'aspiration (140) est rempli au moins en partie d'un premier matériau (400), de préférence d'un bois de balsa et/ou d'une mousse, en particulier de polytéréphtalate d'éthylène et/ou de polychlorure de vinyle, lequel présente une densité et/ou une solidité inférieure(s) à celle(s) du matériau des brides de longeron de côté de pression et/ou des brides de longeron de côté d'aspiration.

10. Pale de rotor (1) selon au moins l'une quelconque des revendications précédentes, comprenant
- deux ou plusieurs dispositifs d'application de charge (310, 310', 320), et/ou
- deux ou plusieurs ouvertures de levage (410, 420),
dans laquelle les deux ou plusieurs dispositifs d'application de charge et/ou les deux ou plusieurs ouvertures de levage sont disposés selon au moins l'une quelconque des revendications précédentes.

11. Pale de rotor (1) selon au moins l'une quelconque des revendications précédentes, comprenant deux ou plusieurs dispositifs de couplage de charge (330, 330', 340), qui sont disposés et sont réalisés de préférence en tant qu'ouverture d'application de charge pour recevoir des éléments de couplage cylindriques d'un ou de plusieurs engins de levage.

12. Pale de rotor (1) selon au moins l'une quelconque des revendications précédentes, dans laquelle le dispositif d'application de charge (310, 310', 320) est réalisé en tant qu'élément de raccordement pour un système de dégivrage de pale de rotor.

13. Eolienne (100) avec au moins une pale de rotor (1) selon au moins l'une quelconque des revendications 1 - 12.

14. Procédé de montage d'une pale de rotor (1), comprenant les étapes
- de fourniture d'une pale de rotor selon au moins l'une quelconque des revendications 1 - 12 ;
- de guidage d'un engin de levage à travers l'ouverture de levage (410, 420) de part en part ;
- de fixation de l'engin de levage sur le dispositif d'application de charge (310, 310', 320), de préférence par un agencement d'un élément de levage dans l'ouverture d'application de charge et de fixation de l'engin de levage sur l'élément de levage ;
- de relevage de la pale de rotor avec l'engin de levage dans une position de montage.

15. Procédé de fabrication d'une pale de rotor (1) selon au moins l'une quelconque des revendications 1 - 12, comprenant les étapes
- de raccordement d'une première entretoise de longeron (210) à au moins un dispositif d'application de charge (310, 310', 320) ;
- éventuellement de raccordement d'une deuxième entretoise de longeron (220) à l'au moins un dispositif d'application de charge ;
- d'agencement d'un module, comprenant la première entretoise de longeron, éventuellement la deuxième entretoise de longeron, et l'au moins un dispositif d'application de charge, sur un élément de pale de rotor, en particulier une coque extérieure, de la pale de rotor.
